# EUROPÄISCHE PATENTANMELDUNG

(11) **EP 0 945 467 A2**
(43) Veröffentlichungstag der Anmeldung: **29.09.1999**
(21) Anmeldenummer: 99101425.9
(22) Anmeldetag: 27.01.1999
(51) Int. Cl.: C08F 2/00

(54) **Polymerisationsinitiierende geträgerte Systeme zur radikalischen Polymerisation von konjugierten Dienen und zur Copolymerisation dieser mit weiteren Monomeren in Suspensions- oder Gasphasenverfahren**

(30) Priorität: 09.02.1998 DE 19805085
(71) Anmelder: Bayer Aktiengesellschaft, 51368 Leverkusen (DE)
(72) Erfinder: Dauben, Michael, Dr., 41468 Neuss (DE); Hoch, Martin, Dr., 42657 Solingen (DE); Oppenheimer-Stix, Christiane, Dr., 41468 Neuss (DE); Schertl, Peter, Dr., 51373 Leverkusen (DE)

(57) **Zusammenfassung**

Die Erfindung betrifft ein allgemein anwendbares Verfahren zur radikalischen Polymerisation von Monomeren in Gasphasen- oder Suspensionsverfahren unter Einsatz geträgerter polymerisationsinitiierender Systeme bestehend aus
a) einer oder mehreren Komponenten, die eine radikalische Polymerisation initiieren und starten,
b) einem Träger, auf den die polymerisationsinitiierende Komponente aufgebracht wird,
   und
c) gegebenenfalls einem oder mehreren Reglern, die einen Einfluß auf die Reaktionskinetik und/oder die Produkteigenschaften haben.

## Beschreibung

Der Homo- und Copolymerisation ein- oder mehrfach ungesättigter, auch konjugierter, Diene mit Hilfe ionischer oder radikalischer Initiatoren kommt eine große industrielle Bedeutung zu. Aus umweltrelevanten Gründen und aufgrund wirtschaftlicher Überlegungen ist man bestrebt, die angewandten Verfahren, in vielen Fällen Lösungsverfahren, zu optimieren oder durch neue Verfahren abzulösen. Dabei ist man bestrebt, die Polymerisation besagter Monomere in der Gasphase oder in Suspensions-Prozessen durchzuführen, da dabei zum einen in der Gasphase keine Lösungsmittel eingesetzt werden müssen und Emission und Abwasserbelastung verringert werden können und zum anderen in Suspensions- und Gasphasenverfahren die hergestellten Polymeren in vorteilhafter Form anfallen.

Zusätzlich kann man durch diese Verfahren neuartige Kautschuke mit besonderen Produkteigenschaften herstellen. Insbesondere erhält man im Polymeren besonders gut dispergierte Füllstoffe, wenn diese bei der Polymerisation als Träger der Aktivkomponente des Katalysators zugegen sind.

Es ist Stand der Technik (Encyclopedia of Polymer Science and Engineering, Vol. 2, S. 1 ff, Vol. 2, S. 729 ff und Vol. 13, S. 708 ff), ein- oder mehrfach ungesättigte Monomere mit Hilfe kationischer, anionischer oder radikalischer Initiatoren bzw. mit Hilfe von Systemen, die solche bilden können, in Polymere zu überführen. Diese Verfahren werden vorzugsweise in Lösungsprozessen verwirklicht, in welchen die besagten Initiatoren löslich sind und auf diese Weise möglichst effizient wirken.

Ebenso ist bekannt (Ullmanns Enzyklopädie der technischen Chemie, Band 13, S. 611 ff), daß sich z. B. Butadien und Acrylnitril mit Hilfe radikalischer Initiatoren oder Stoffe, die radikalische Initiatoren bilden, in polymere Produkte überführen lassen.

Aus EP-A-0798339 ist bekannt, daß die Copolymerisation von Butadien und Styrol beispielsweise durch ein System aus Organolithium-Verbindung, Kaliumalkoholat und Ether oder aminofunktionaler Verbindung in aliphatischen Lösungsmitteln initiiert und gesteuert werden kann.

Die beschriebenen Systeme besitzen den Nachteil, daß sie nur unter verhältnismäßig hohem Aufwand für Suspensions-Prozesse und nicht für Gasphasenverfahren eingesetzt werden können.

Aus EP-B-0647657 ist bereits bekannt, daß man die Polymerisation von konjugierten Dienen, insbesondere von Butadien, ohne Zusatz von Lösungsmitteln in der Gasphase durchführen kann, indem man ein Katalysatorsystem auf der Basis von Verbindungen der Seltenen Erden und einer aluminiumorganischen Verbindung auf einem teilchenförmigen, inerten, anorganischen Feststoff mit einer spezifischen Oberfläche größer als 10 m²/g (BET) und mit einem Porenvolumen von 0,3 bis 15 ml/g verwendet.

EP-A-0419951 beschreibt Verfahren zur Festphasenpolymerisation von Acrylnitril aus der Gasphase unter Verwendung radikalischer Initiatoren in Gegenwart von Feststoffen, die als Saatsubstrate wirken und in die das Monomere flüssig eingeleitet werden. Das Verfahren kann auch in Gegenwart von Vermittlersubstanzen durchgeführt werden, die als Lösungs- oder Quellungsmittel für die entstehenden Polymere dienen und ein Absinken der Reaktionsgeschwindigkeit verhindern.

Die beschriebenen Systeme stellen zum einen klassische Ziegler-Systeme dar, für die in der Literatur zahlreiche Methoden zur Heterogenisierung allgemein beschrieben sind, und zum anderen Gasphasenpolymerisationsverfahren, die sowohl spezielle Saatsubstrate als auch Vermittlersubstanzen erfordern.

Es war daher Aufgabe der vorliegenden Erfindung, ein allgemein anwendbares Verfahren zur radikalischen Polymerisation von Monomeren in Gasphasen- oder Suspensionsverfahren bereitzustellen, um die spezifischen Nachteile von Lösungs- oder Emulsionsverfahren auf diese Weise zu vermeiden.

Die Aufgabe wird erfindungsgemäß durch den Einsatz geträgerter polymerisationsinitiierender Systeme bestehend aus
a) einer oder mehreren Komponenten, die eine radikalische Polymerisation initiieren und starten,
b) einem Träger, auf den die polymerisationsinitiierende Komponente aufgebracht wird,
   und
c) gegebenenfalls einem oder mehreren Reglern, die einen Einfluß auf die Reaktionskinetik und/ oder die Produkteigenschaften haben,
gelöst.

Die Trägerung der polymerisationsauslösenden Stoffe, nachfolgend Initiator genannt, erfolgt vorzugsweise durch Aufbringen dieser Stoffe oder mehrerer Initiatorkomponenten, gelöst in einer flüssigen Phase, auf ein poröses Trägermaterial.

Eine weitere bevorzugte Ausführungsform betrifft die gleichzeitige Immobilisierung von Initiatoren und polymerisationsbeeinflussenden sowie produktmodifizierenden Stoffen, nachfolgend Regler genannt.

Bevorzugt erfolgt die Trägerung, indem ein Lösungsmittel oder Lösungsmittelgemisch, das den Initiator oder die Initiatorkomponenten gelöst enthält, mit einem porösen Trägermaterial in Kontakt gebracht wird, wobei das Trägermaterial inert gegenüber dem Initiator bzw. den Initiatorkomponenten ist und wobei das Lösungsmittel oder das Lösungsmittelgemisch vorzugsweise vollständig vom Träger entfernt werden kann oder besonders bevorzugt das Volumen des Lösungsmittels oder des Lösungsmittelgemisches, das auf dem Trägermaterial verbleibt, kleiner oder gleich dem Porenvolumen des verwendeten Trägermaterials ist. In einer weiteren bevorzugten Ausführungsform werden der Initiator oder die Initiatorkomponenten in gelöster Form auf einen Träger aufgebracht und durch Zusatz geeigneter Fällungsmittel auf dem Träger ausgefällt und somit in fester Form gleichzeitig auf dem Träger abgeschieden.

Vorzugsweise vor, während und ggf. nach dem Auftragen der Initiatorlösung wird der Feststoff bewegt, z.B. in einem Rührkessel mit einem konventionellen Rühraggregat wie z.B. einem Kreuzbalkenrührer oder einem Wendelrührer, oder in einer weiteren bevorzugten Form in einem Pflugscharmischer.

In einer weiteren bevorzugten Ausführungsform erfolgt die Imprägnierung des Trägermaterials mit Initiatorlösung in einem Wirbelbett. Dabei wird auf das Trägermaterial, das durch einen Inertgasstrom fluidisiert wird, die Wirkstofflösung aufgebracht, z.B. durch Versprühen mittels einer Düse. Über einen internen Kreislauf kann das Inertgas, nachdem es von mittransportiertem Lösungsmittel befreit wurde, in den Reaktor zurückgeführt werden. Das inerte Lösungsmittel wird bevorzugt zur Zubereitung der Wirkstofflösung wiederverwendet. Das erfindungsgemäße Verfahren kann vorteilhafterweise auch kontinuierlich durchgeführt werden. Des weiteren ist es vorteilhaft, durch Variation der Menge an Initiatorlösung und gegebenenfalls Reglerlösung das Wirksamkeitsniveau des Initiatorsystems gezielt zu steuern.

Die Herstellung des geträgerten Initiatorsystems kann in einem weiten Temperaturbereich erfolgen. Bevorzugt liegt die Temperatur zwischen Schmelz- und Siedepunkt des inerten Lösungsmittels bzw. der inerten Lösungsmittel und unterhalb der Zersetzungstemperatur des Initiators oder der Initiatoren. Bevorzugt wird bei Temperaturen von -20 bis 100°C, besonders bevorzugt 20 bis 40°C, gearbeitet.

Im Anschluß an die Imprägnierung des Trägermaterials mit Wirkstofflösung werden in einer bevorzugten Ausführungsform das inerte Lösungsmittel bzw. die inerten Lösungsmittel destillativ vollständig oder so weit entfernt, daß das Volumen des verbleibenden Lösungsmittel bzw. der verbleibenden Lösungsmittel kleiner oder gleich dem Porenvolumen des verwendeten Trägermaterials ist.

Die Destillation kann sowohl in dem gleichen Behälter, in dem auch die Imprägnierung durchgeführt wurde, als auch in einer separaten Apparatur, z.B. einem Wirbelschichttrockner, erfolgen. Die Destillation wird je nach verwendetem Lösungsmittel bei Temperaturen von 0 bis 150°C, vorzugsweise bei 10 bis 70°C, und Drücken von 0,001 mbar bis 20 bar absolut, vorzugsweise 0,001 mbar bis Normaldruck, durchgeführt. Die Destillation kann auch kontinuierlich durchgeführt werden. Das aufgefangene Kondensat kann vorteilhaft ohne weitere Aufarbeitung als Lösungsmittel für die in der Imprägnierung eingesetzten Wirkstoffe wiederverwendet werden.

Bei dem erfindungsgemäßen Verfahren können alle porösen, in dem verwendeten Lösungsmittel oder den Lösungsmittelgemischen formstabilen, inerten Trägermaterialien mit ausreichend hohem Porenvolumen, Oberfläche und Teilchengröße eingesetzt werden. Als Trägermaterialien eignen sich teilchenförmige organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1 000 m²/g (BET) und deren Korngröße zwischen 10 und 2 500 µm beträgt, bevorzugt zwischen 50 und 1 000 µm.

In einer bevorzugten Ausführungsform können auch Mischungen unterschiedlicher Trägermaterialien verwendet werden.

Die spezifische Oberfläche wird in üblicher Weise bestimmt nach Brunauer, Emmet und Teller, J. Amer. Chem. Soc. 1938, 60, 309, das Porenvolumen durch die Zentrifugationsmethode nach McDaniel, J. Colloid Interface Sci. 1980, 78, 31 und die Teilchengröße nach Cornillaut, Appl. Opt. 1972, 11, 265.

Unter inert wird in diesem Fall verstanden, daß die Feststoffe bzw. Trägermaterialien so beschaffen sind bzw. durch eine Vorbehandlung, bspw. durch Trocknen, so vorbehandelt werden, daß die Bildung eines polymerisationsinitiierenden Stoffes nicht behindert wird bzw. keine unerwünschten Reaktionen mit dem Monomeren stattfinden.

Als organische Feststoffe eignen sich pulverförmige, poröse polymere Materialien, bevorzugt in Form frei fließender Pulver, mit den obengenannten Eigenschaften. Beispielhaft seien genannt, ohne die vorliegende Erfindung einschränken zu wollen, Polyolefine, wie beispielsweise Polyethen, Polypropen, Polystyrol, Polystyrol-*co*-divinylbenzol, Polybutadien, Polyacrylnitril, Polyacrylate, wie beispielsweise Polymethylacrylat, Polymethylmethacrylat, Polyether, wie beispielsweise Polyethylenoxid, Polyoxytetramethylen, Polysulfide, wie beispielsweise Poly-*p*-phenylensulfid, oder Polyamide. Besonders geeignete Materialien sind Polypropylen, Polystyrol und Polyethylenoxid. Die genannten organischen Feststoffe, die der obengenannten Spezifikation genügen und deshalb für die Verwendung als Trägermaterialien geeignet sind, werden bspw. näher beschrieben in Ullmanns Enzyklopädie der technischen Chemie, Band 19, S. 195 ff (Polypropylen), Band 19, S. 265 ff (Polystyrol) und Band 19, S. 31 ff (Polyethylenoxid).

Als anorganische Feststoffe seien bspw. genannt, ohne die vorliegende Erfindung jedoch einschränken zu wollen, Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten anorganischen Feststoffe, die der obengenannten Spezifikation genügen und deshalb für die Verwendung als Trägermaterialien geeignet sind, werden bspw. näher beschrieben in Ullmanns Enzyklopädie der technischen Chemie, Band 21, S. 439 ff (Silicagele), Band 23, S. 311 ff (Tone), Band 14, S. 633 ff (Ruße) und Band 24, S. 575 ff (Zeolithe).

Als polymerisationsauslösende Stoffe können alle Polymerisationsinitiatorsysteme Verwendung finden, die in homogener oder heterogener Phase für die radikalische Polymerisation ungesättigter Monomere geeignet sind. Derartige Initiatoren sind, ohne die vorliegende Erfindung einschränken zu wollen, bevorzugt radikalische bzw. radikalbildende Verbindungen oder Stoffgemische, wie beispielsweise Hydroperoxide, bevorzugt Cumylhydroperoxid oder *tert*.-Butylhydroperoxid, organische Peroxide, bevorzugt Dibenzoylperoxid, Dilaurylperoxid, Dicumylperoxid, Di-*tert*.-butylperoxid, Methylethylketonperoxid, *tert*.-Butylbenzoylperoxid, Diisopropylperoxydicarbonat, Dicyclohexylperoxydicarbonat, Di-*tert*.-butylperoxalat, anorganische Peroxide, bevorzugt Kaliumpersulfat, Kaliumperoxydisulfat oder Wasserstoffperoxid, Azoverbindungen, bevorzugt Azobis(isobutyronitril), 1,1'-Azobis(1-cyclohexannitril) 4,4'-Azobis(4-cyanovaleriansäure) oder Triphenylmethylazobenzol, Redox-Systeme, bevorzugt Mischungen aus Peroxiden und Aminen, Mischungen aus Peroxiden und Reduktionsmitteln, gegebenenfalls in Anwesenheit von Metallsalzen und/oder Chelatbildnern. Allgemein gesprochen können im erfindungsgemäßen Verfahren solche Initiatorsysteme eingesetzt werden, die dem Fachmann aus der Emulsionspolymerisation bekannt sind.

Die Initiatorsysteme werden bevorzugt rein oder in Form von Mischungen von zwei oder drei oder mehreren verschiedenen Initiatorsystemen eingesetzt.

In einer weiteren bevorzugten Ausführungsform werden Teile des Initiatorsystems getrennt in fester, flüssiger oder gasförmiger Form der Reaktion beigegeben. Dieses Vorgehen eignet sich besonders für Redox-Initiatorsysteme.

Als Lösungsmittel können alle Lösungsmittel eingesetzt werden, in denen die besagten Polymerisationsinitiatoren löslich sind und die inert gegenüber den Initiatorsystemkomponenten sind. Geeignet sind insbesondere, ohne die vorliegende Erfindung einschränken zu wollen, Wasser, Alkohole, bevorzugt Methanol, Ethanol, *iso*-Propanol, Butylalkohol oder Amylalkohol, Ketone, bevorzugt Aceton, 2-Butanon oder 3-Pentanon, aromatische Kohlenwasserstoffe, bevorzugt Benzol und alkyl- oder aryl-substituierte Benzolderivate, besonders bevorzugt Toluol, Xylol, Diisopropylbenzol, Butylbenzol, Hexylbenzol, Dodecylbenzol, oder 1,2,3,4-Tetrahydronaphthalin, lineare oder alkyl- oder arylsubstituierte aliphatische Kohlenwasserstoffe, bevorzugt acyclische Kohlenwasserstoffe, besonders bevorzugt Pentan, Iso-Pentan, Hexan, Heptan, Octan, Nonan, Decan, Dodecan, Tetradecan oder Hexadecan, oder cyclische Kohlenwasserstoffe, besonders bevorzugt Cyclohexan, Methylcyclohexan oder Decahydronaphthalin.

Als Fällungsmittel können alle Flüssigkeiten eingesetzt werden, in welchen der Initiator oder die Initiatorkomponenten schwerlöslich oder unlöslich sind. Als Fällungsmittel eignen sich insbesondere, ohne die vorliegende Erfindung einzuschränken, Wasser, Alkohole, bevorzugt Methanol, Ethanol, *iso*-Propanol, Butylalkohol oder Amylalkohol, Ketone, bevorzugt Aceton, 2-Butanon oder 3-Pentanon, aromatische Kohlenwasserstoffe, bevorzugt Benzol und substituierte Benzolderivate, besonders bevorzugt Toluol, Xylol, Diisopropylbenzol, Butylbenzol, Hexylbenzol, Dodecylbenzol, oder 1,2,3,4-Tetrahydronaphthalin, aliphatische Kohlenwasserstoffe, bevorzugt acyclische Kohlenwasserstoffe, besonders bevorzugt Pentan, Hexan, Heptan, Octan, Nonan, Decan, Dodecan, Tetradecan oder Hexadecan, oder cyclische Kohlenwasserstoffe, besonders bevorzugt Cyclohexan, Methylcyclohexan oder Decahydronaphthalin.

Als Regler können alle Stoffe verwendet werden, die auf die Kinetik der Polymerisationsreaktion und auf die Struktur des Polymeren Einfluß nehmen, wie beispielsweise in Ullmanns Enzyklopädie der technischen Chemie, Band 15, S. 188 ff beschrieben. Geeignet sind insbesondere ohne die vorliegende Erfindung einschränken zu wollen, aromatische Kohlenwasserstoffe, besonders bevorzugt Triphenylmethan, Nitro- oder Nitrosoaromaten, besonders bevorzugt Nitrobenzol, Nitrotoluol oder Nitrosobenzol, organische Halogenverbindungen, besonders bevorzugt Tetrachlormethan, Tetrabrommethan oder Bromtrichlormethan, oder organische Schwefelverbindungen, bevorzugt Alkylmercaptane und Xanthogendisulfide, besonders bevorzugt n-Dodecylmercaptan, tert.-Dodecylmercaptan, Butylmercaptan, *tert*.-Butylmercaptan, Dibutyldisulfid, Diphenyldisulfid, Berzyldiethyldithiocarbamat oder 2-Phenylethyldiethyldithiocarbamat, und Carbonylverbindungen, bevorzugt Ketone und Aldehyde, besonders bevorzugt Acetaldehyd, Propionaldehyd und Aceton.

Die Erfindung betrifft den Einsatz des erfindungsgemäß hergestellten geträgerten Initiators bzw. Initiatorsystems in einem Verfahren zur radikalischen Homo- oder Copolymerisation ein- oder mehrfach ungesättigter Monomere. Geeignete Monomere sind beispielsweise, ohne die vorliegende Erfindung einschränken zu wollen, bevorzugt einfach ungesättigte Monomere, besonders bevorzugt Ethen, Styrol und Methylstyrol, mehrfach ungesättigte Monomere, besonders bevorzugt Divinylbenzol, oder ungesättigte funktionelle Monomere, besonders bevorzugt Acrylnitril, Tetrafluorethylen, Methylacrylat, Methylmethacrylat, Acrylamid, Vinylacetat und Vinylchlorid, und konjugierte Diene, bevorzugt 1,3-Butadien, Isopren oder Chloropren, in Suspensions-Prozessen und in der Gasphase.

Diese Polymerisation erfolgt besonders bevorzugt, indem man die ein- oder mehrfach ungesättigten, nicht-konjugierten oder konjugierten Monomeren mit dem oben beschriebenen erfindungsgemäßen geträgerten Initiator oder Initiatorsystemen gasförmig, flüssig in feiner Verteilung oder gelöst bzw. dispergiert in einem geeigneten Verdünnungsmittel in Berührung bringt. Den gasförmigen oder versprühten Monomeren können weitere Gase zugemischt werden, die entweder der Verdünnung, der Versprühung oder der Wärmeabführung dienen. Die Polymerisation kann bei Drücken von 0,001 bis 1 000 bar, bevorzugt 0,1 bis 100 bar besonders bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder für eine Gasphasen- oder Suspensionspolymerisation geeigneten Apparatur bewerkstelligt werden. So kann z.B. ein Rührreaktor, ein Drehreaktor oder ein Fließbettreaktor oder eine Kombination dieser Reaktortypen verwendet werden.

Durch die Polymerisation vorzugsweise in der Gasphase oder in Suspensionsverfahren können auch sehr hochmolekulare Polymere hergestellt werden, die mittels Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können gegebenenfalls auf übliche Weise compoundiert und vulkanisiert werden, wie beispielsweise näher in Encyclopedia of Polymer Science and Engineering, Vol. 4, S. 66 ff (Compoundierung) und Vol. 17, S. 666 ff (Vulkanisation) beschrieben wird. Bevorzugt werden zur Verbesserung der Hitze- und Lagerstabilität bekannte phenolische, aminische, schwefelhaltige oder phosphorhaltige Alterungsschutzmittel zugegeben. Diese sind z.B. in Ullmanns Enzyklopädie der technischen Chemie, Band 8, S. 19 ff näher beschrieben.

Die nachfolgenden Beispiele sollen die vorliegende Erfindung zur Herstellung geträgerter polymerisationsinitiierender Systeme sowie die Durchführung damit initiierter Gasphasenpolymerisationen und -copolymerisationen darstellen, ohne diese jedoch auf die Beispiele einzuschränken.

### Beispiele

### Beispiel 1

### Vorbehandlung des Trägermaterials für Polymerisationsinitiatorsysteme:

Als Trägermaterialien für radikalische Initiatorsysteme zur Acrylnitril-Butadien- und Styrol-Butadien-Polymerisation wurden ein Silicagel (Zeosil 1165MP; Handelsprodukt der Rhône-Poulenc AG) und ein Polypropylen (Accurel EP100; Handelsprodukt der Akzo Nobel AG) verwendet. Zeosil 1165MP hat eine Oberfläche nach BET von 140 m²/g und ein Porenvolumen von 1,97 ml/g; die Partikeldurchmesser betragen zwischen 200 und 600 µm. Accurel EP100 hat eine Oberfläche nach BET von 50 m²/g, das Porenvolumen beträgt 2,40 ml/g und die Partikeldurchmesser betragen zwischen 200 und 1 000 µm. Vor dem Einsatz wurden jeweils 100 g der Trägermaterialien bei 0,01 mbar und Raumtemperatur getrocknet und anschließend unter Ausschluß von Luft und Feuchtigkeit abgefüllt.

### Beispiel 2

### Herstellung eines Silica-geträgerten Dibenzoylperoxid-Initiatorsystems:

Als Trägermaterial diente Zeosil 1165MP, das gemäß Beispiel 1 vorbehandelt eingesetzt wurde. 50 g der Substanz wurden in einem Glasrührgefäß vorgelegt und eine bei 20°C hergestellte Lösung von 1 g Dibenzoylperoxid in 76 g Acrylnitril wurde mittels eines Tropftrichters ebenfalls bei 20°C innerhalb von 30 Minuten auf das mit Hilfe eines Magnetrührers gründlich durchmischte Silica-Material getropft. Dabei blieb das resultierende 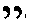 getränkte" Material stets vollkommen fluidisiert und zeigte keinerlei Anbackungen. Das Produktmaterial wurde anschließend durch Überleiten von Stickstoff und unter leichter Bewegung mit Stickstoff überlagert. Man erhielt 127 g eines frei fließenden Produktes mit einer Beladung von 8 mg Dibenzoylperoxid pro 1 g Material und zusätzlich mit 0,7 ml Acrylnitril pro 1 g Material im Porenvolumen.

### Beispiel 3

### Herstellung eines Accurel-geträgerten α,α'-Azobis(isobutyronitril)-Initiatorsystems:

Als Trägermaterial wurde gemäß Beispiel 1 vorbehandeltes Accurel EP100 eingesetzt. Von diesem wurden 10 g in einem Schlenkgefäß vorgelegt, unter Durchmischung mit einem Magnetrührer wurde die bei 20°C hergestellte Lösung von 1,0 g α,α'-Azobis(isobutyronitril) in 10 ml Toluol innerhalb von 15 Minuten ebenfalls bei 20°C auf den Träger getropft und anschließend weitere 30 Minuten bei 20°C gerührt, wobei das resultierende 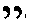 getränkte" Material stets vollkommen fluidisiert blieb. Das Produktmaterial wurde unter leichter Bewegung bei 20°C durch Evakuieren bis 0,01 mbar getrocknet und mit Stickstoff überlagert. Man erhielt 19,6 g eines freifließenden, weißen Pulvers mit einer Beladung von 51 mg α,α'-Azobis(isobutyronitril) pro 1 g Initiatormaterial und zusätzlich mit 0,5 ml Toluol pro 1 g Initiatormaterial im Porenvolumen.

### Beispiel 4

### Copolymerisation von Acrylnitril und Butadien in der Gasphase:

Die Polymerisation wurde durchgeführt in einem liegenden 1-Liter-Büchi-Glasautoklaven, der mit auf einer horizontalen Rührwelle angebrachten wandgängigen Ankerrührern ausgestattet ist. Vor Reaktionsbeginn wurde der Reaktor mit 1 bar Stickstoff beaufschlagt. 60 g eines Silica-geträgerten Initiators aus Beispiel 2, im Speziellen mit 8 mg Dibenzoylperoxid pro 1 g Material belegt, wurden mittels einer Schleuse in den Reaktor befördert, in dem zuvor eine Reaktionstemperatur von 90°C über den Mantelkreislauf eingestellt wurde. Sofort danach wurde gasförmiges Butadien in den Reaktor dosiert, wobei ein Butadien-Partialdruck von 6 bar angefahren wurde. Zu Reaktionsstart stieg die Schüttungstemperatur auf etwa 93°C an, nach 5 Minuten konnte die Reaktion über den gesamten Verlauf isotherm bei 90°C gefahren werden. Der Versuch wurde in der Semi-Batch-Fahrweise durchgeführt, d.h. es wurde nur die durch Druckabfall festgestellte und somit in der Reaktion verbrauchte Butadienmenge nachdosiert, jedoch kein weiterer Initiator und kein weiteres Acrylnitril, und es wurde bis zum Versuchsende auch kein Produkt ausgeschleust. Das Anwachsen der umgewälzten Schüttung konnte in dem Glasreaktor gut beobachtet werden. Im Reaktionsverlauf kam es nicht zu Partikelagglomerationen oder Verklebungen. Nach 1½ Stunden wurde der Versuch beendet, wobei nach Demontage des Reaktors 103 g des noch Silica-haltigen Produktes erhalten wurden. Dabei handelte es sich laut IR-Analyse um ein Copolymer aus Acrylnitril und Butadien. Dieser NBR-Kautschuk hatte einen Acrylnitril-Anteil von knapp 46 %.

### Beispiel 5

### Copolymerisation von Styrol und Butadien in der Gasphase:

Die Polymerisation wurde in dem liegenden 1-Liter-Büchi-Glasautoklaven, wie er im vorangehenden Beispiel beschrieben wurde, durchgeführt. Es wurden 19,1 g eines Accurel-geträgerten Initiators, wie er in Beispiel 3 beschrieben wurde, im Speziellen mit 51 mg AIBN pro 1 g Material belegt, mittels einer Schleuse in den Reaktor befördert, in dem zuvor eine Reaktionstemperatur von 85°C über den Mantelkreislauf eingestellt wurde. Sofort danach wurde gasförmiges Butadien in den Reaktor dosiert, wobei ein Butadien-Partialdruck von 5 bar angefahren wurde. Zeitgleich wurde mit der Verdüsung von monomerem Styrol aus einem Vorratsgefäß über eine Pumpe in den Reaktor begonnen. Diese Einspeisung konnte nicht kontinuierlich, sondern immer nur abschnittweise durchgeführt werden, da bei den relativ kleinen Monomermengen sonst keine feinteilige Verdüsung zu erreichen war. So erfolgte die Styroleinspeisung im Zwei-Minuten-Abstand in 0,2 ml-Schritten. In den ersten Minuten nach Reaktionsstart, d.h. bis zum Erreichen des angestrebten Butadienpartialdruckes, stieg die gemessene Schüttungstemperatur auf etwa 87°C an, nach 5 Minuten konnte die Reaktion über den gesamten Verlauf isotherm bei 85°C gefahren werden. Der Versuch wurde in der Semi-Batch-Fahrweise durchgeführt, d.h. es wurde zum einen die durch Druckabfall festgestellte und damit in der Reaktion verbrauchte Butadienmenge nachdosiert, wobei einerseits die durch den Initiatorzerfall freigesetzte geringe Stickstoffmenge und andererseits in der Gasphase befindliches Styrol bzw. Toluol wegen des bei der Reaktionstemperatur niedrigen Dampfdrucks vernachlässigt wurden. Zum anderen wurde Styrol wegen fehlender Möglichkeit einer On-line-Analytik des Produktes konstant mit der oben angegebenen Dosierrate eingedüst. Es wurde im Reaktionsverlauf kein weiterer Initiator nachdosiert und kein Produkt ausgeschleust. Nach ca. einer halben Stunde durchlief die gerührte Reaktorschüttung eine Klebrigkeitsphase, jedoch konnte das Material mit Hilfe des wandschabenden Rührers noch gut durchmischt werden. Im Reaktionsverlauf konnte in dem Glasreaktor ein Anwachsen der umgewälzten Schüttung beobachtet werden. Nach 90 Minuten wurde der Versuch beendet, wobei nach Demontage des Reaktors rund 38 g des noch Accurel-haltigen Produktes erhalten wurden. Dabei handelte es sich laut IR-Analyse um ein Styrol-Butadien-Copolymer. Dieses hatte einen Styrol-Anteil von ca. 42%, von diesem wiederum (bezogen auf 100% Styrol) lagen 38% blockartig vor. Im Polybutadien-Anteil lag der *cis*-Gehalt (bezogen auf 100% Polybutadien) bei 18%, der *trans*-Gehalt bei 64 % und der *vinyl*-Gehalt bei 18%.

## Patentansprüche

1. Geträgertes polymerisationsinitiierendes System, bestehend aus
a) einer oder mehreren Komponenten, die eine radikalische Polymerisation initiieren und starten,
b) einem Träger, auf den die polymerisationsinitiierende Komponente aufgebracht wird,
und
c) gegebenenfalls einem oder mehreren Reglern, die einen Einfluß auf die Reaktionskinetik und/oder die Produkteigenschaften haben.

2. Geträgertes polymerisationsinitiierendes System nach Anspruch 1, dadurch gekennzeichnet, daß es sich bei der Komponente a) um Azoverbindungen handelt.

3. Geträgertes polymerisationsinitiierendes System nach Anspruch 1, dadurch gekennzeichnet, daß es sich bei der Komponente a) um Peroxidverbindungen handelt.

4. Geträgertes polymerisationsinitiierendes System nach Anspruch 1, dadurch gekennzeichnet, daß es sich bei der Komponente a) um Redoxsysteme handelt.

5. Geträgertes polymerisationsinitiierendes System nach Anspruch 1, dadurch gekennzeichnet, daß Teile der Komponente a) getrennt in fester, flüssiger oder gasförmiger Form eingesetzt werden.

6. Geträgertes polymerisationsinitiierendes System nach einem oder mehreren der Ansprüche 1 bis 5, dadurch gekennzeichnet, daß als Trägermaterial b) Silica, Zeolithe, Metalloxide oder Ruß, ein Salz oder eine Mischung aus zwei oder mehreren dieser Komponenten eingesetzt wird.

7. Geträgertes polymerisationsinitiierendes System nach einem oder mehreren der Ansprüche 1 bis 5, dadurch gekennzeichnet, daß als Trägermaterial b) ein organischer Träger eingesetzt wird.

8. Geträgertes polymerisationsinitiierendes System nach einem oder mehreren der Ansprüche 1 bis 7, dadurch gekennzeichnet, daß als Regler c) eine Schwefelverbindung, ein Mercaptan oder ein Xanthogendisulfid oder eine Mischung aus zwei oder mehreren dieser Komponenten eingesetzt wird.

9. Geträgertes polymerisationsinitiierendes System nach einem oder mehreren der Ansprüche 1 bis 7, dadurch gekennzeichnet, daß als Regler c) eine Halogenverbindung eingesetzt wird.

10. Geträgertes polymerisationsinitiierendes System nach einem oder mehreren der Ansprüche 1 bis 7, dadurch gekennzeichnet, daß als Regler c) eine Carbonylverbindung eingesetzt wird.

11. Verwendung eines geträgerten polymerisationsinitiierenden Systems nach einem oder mehreren der Ansprüche 1 bis 10 in einem, optional kontinuierlich geführten, Verfahren zur radikalischen Suspensionspolymerisation.

12. Verwendung eines geträgerten polymerisationsinitiierenden Systems nach einem oder mehreren der Ansprüche 1 bis 10 in einem, optional kontinuierlich geführten, Verfahren zur radikalischen Gasphasenpolymerisation.

13. Verwendung eines geträgerten polymerisationsinitiierenden Systems nach einem oder mehreren der Ansprüche 1 bis 12 in einem, optional kontinuierlich geführten, Verfahren zur Polymerisation von konjugierten Dienen.

14. Verwendung eines geträgerten polymerisationsinitiierenden Systems nach einem oder mehreren der Ansprüche 1 bis 12 in einem, optional kontinuierlich geführten, Verfahren zur Copolymerisation von verschiedenen konjugierten Dienen.

15. Verwendung eines geträgerten polymerisationsinitiierenden Systems nach einem oder mehreren der Ansprüche 1 bis 12 in einem, optional kontinuierlich geführten, Verfahren zur Copolymerisation von konjugierten Dienen mit weiteren Monomeren.

16. Verwendung eines geträgerten polymerisationsinitiierenden Systems nach einem oder mehreren der Ansprüche 1 bis 15 in einem, optional kontinuierlich geführten, Verfahren zur Copolymerisation von konjugierten Dienen mit weiteren Monomeren in der Gasphase, wobei diese Monomere wahlweise auch flüssig in die Reaktion eingespeist können.

17. Verwendung eines geträgerten polymerisationsinitiierenden Systems nach einem oder mehreren der Ansprüche 1 bis 16 in einem, optional kontinuierlich geführten, Verfahren zur Copolymerisation von konjugierten Dienen mit weiteren Monomeren in der Gasphase, wobei diese Monomere wahlweise auch in geträgerter Form in die Reaktion eingehen können.

18. Verwendung eines geträgerten polymerisationsinitiierenden Systems nach einem oder mehreren der Ansprüche 1 bis 17 in einem, optional kontinuierlich geführten, Verfahren zur Copolymerisation von konjugierten Dienen mit weiteren Monomeren in der Gasphase, wobei Agglomerationen bzw. Verklebungen im Reaktionsverlauf durch Wahl eines geeigneten Trägers nahezu vollständig bzw. vollständig vermieden werden.

19. Verwendung eines geträgerten polymerisationsinitiierenden Systems nach einem oder mehreren der Ansprüche 1 bis 18 in einem, optional kontinuierlich geführten, Verfahren zur Copolymerisation von konjugierten Dienen mit weiteren Monomeren in der Gasphase, wobei die Copolymerenzusammensetzung durch geeignete Regler gezielt eingestellt werden kann.

20. Verwendung eines geträgerten polymerisationsinitiierenden Systems nach einem oder mehreren der Ansprüche 1 bis 19 in einem, optional kontinuierlich geführten, Verfahren zur Copolymerisation von konjugierten Dienen mit weiteren Monomeren in der Gasphase, wobei die Copolymerenzusammensetzung durch gezielte Dosierung der Monomeren eingestellt werden kann.

21. Verwendung eines geträgerten polymerisationsinitiierenden Systems nach einem oder mehreren der Ansprüche 1 bis 20 in einem, optional kontinuierlich geführten, Verfahren zur Copolymerisation von konjugierten Dienen mit weiteren Monomeren in der Gasphase, wobei Agglomerationen bzw. Verklebungen im Reaktionsverlauf durch Zugabe eines Puderungsmittels nahezu vollständig bzw. vollständig vermieden werden.

22. Verwendung der Produkte erhältlich nach einem oder mehreren der Ansprüche 1 bis 21 zur Herstellung von Formkörpern durch Extrusion oder Spritzguß.

23. Einsatz der Produkte erhältlich nach einem oder mehreren der Ansprüche 1 bis 21 in Compounds oder zur Herstellung eines Reifens.
